# EUROPEAN PATENT APPLICATION

(11) **EP 4 507 229 A1**
(43) Date of publication of application: **12.02.2025**
(21) Application number: 23784144.0
(22) Date of filing: 15.03.2023
(51) Int. Cl.: H04L 5/00, H04W 72/04

(54) **INFORMATION PROCESSING METHOD AND APPARATUS, AND READABLE STORAGE MEDIUM**

(30) Priority: 08.04.2022 CN 202210369299
(71) Applicant: Datang Mobile Communications Equipment Co., Ltd., Beijing 100085 (CN)
(72) Inventor: ZHAO, Yue, Beijing 100085 (CN); GAO, Xuejuan, Beijing 100085 (CN); SI, Qianqian, Beijing 100085 (CN)
(74) Representative: Maiwald GmbH
(86) International application number: PCT/CN2023/081681
(87) International publication number: WO 2023/193580

(57) **Abstract**

Embodiments of the present disclosure relates to the field of communications technology, and provide an information processing method, device, and readable storage medium for reducing signaling overhead. The method includes: determining, by a terminal, the location of transmission resources based on a first information; and/or determining, by a terminal, the size of transmission resources based on a second information; wherein the first information includes one of the following: location relationships between transmission resources; information of the terminal; or pre-configured location of starting resource block (RB); the second information includes: size relationships among transmission resources.

## Description

### CROSS-REFERENCE TO RELATED APPLICATION

This application claims priority to Chinese Patent Application No. 202210369299.2, filed on April 8, 2022, in China, the entire content of which is incorporated herein by reference.

### TECHNICAL FIELD

The present disclosure relates to the field of communication technology, in particular to an information processing method, an information processing device and readable storage medium.

### BACKGROUND

To address issues such as coverage, latency, and capacity of uplink transmissions in Time Division Duplex (TDD) mode, the technology of non-overlapping sub-band full duplex will be studied, where frequency domain resources are divided into multiple sub-bands that do not overlap each other. Uplink and downlink frequency domain resources are located in different sub-bands; hereinafter referred to as full duplex.

In related technologies, the time and frequency domain transmission resources for repeated transmission by a terminal are configured through Downlink Control Information (DCI) or Radio Resource Control (RRC) signaling. For configured grant Type 1 Physical Uplink Shared Channel (PUSCH) transmission, resources are also configured through RRC signaling.

As can be seen from the above, configuring resources through DCI or RRC signaling increases signaling overhead.

### SUMMARY

Embodiments of the present disclosure provide an information processing method, device, and readable storage medium to reduce signaling overhead.

In a first aspect, embodiments of the present disclosure provide an information processing method, comprising:
determining, by a terminal, the location of transmission resources based on a first information; and/or determining, by a terminal, the size of transmission resources based on a second information;
wherein the first information includes one of the following:
   location relationships between transmission resources; information of the terminal; pre-configured location of starting resource block (RB);
   the second information includes: size relationships between transmission resources.

Optionally, the location relationships between transmission resources includes one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the first information includes location relationship between transmission resources;
the determining, by the terminal, the location of transmission resources based on the first information, comprising:
receiving, by the terminal, the first information sent by the network device, and determining the location of the transmission resources after switching based on the first information; or,
receiving, by the terminal, the first information sent by the network device and determining the location of the transmission resources after switching based on the first information and predefined rules.

Optionally, the information of the terminal includes an identity (ID) of the terminal; the determining, by the terminal, the location of transmission resources based on the first information, comprising:
determining, by the terminal, the location of the starting transmission resources after switching based on the ID of the terminal.

Optionally, the first information includes pre-configured locations of starting RBs; the determining, by the terminal, the location of transmission resources based on the first information, including:
determining, by the terminal, the starting location of the transmission resources after switching based on a third information and the pre-configured locations of starting RBs;
wherein the third information includes one or more of the following:
   terminal ID, the location of the starting RBs of an activated full-duplex Physical Downlink Control Channel (PDCCH).

Optionally, the sub-band or Bandwidth Part (BWP) in which the transmission resources after switching are located is determined by one of the following manners:
predefined; configured by the network device.

Optionally, the size relationships between transmission resources include:
the size of transmission resources before switching is consistent with that after switching; or,
a mapping relationship between the size of transmission resources before switching and the size of transmission resources after switching.

Optionally, the size relationships between the transmission resources before switching and the transmission resources after switching are determined through one of the following manners:
predefined; configured by the network device.

Optionally, the mapping relationship between the sizes of transmission resources include one or more of the following:
the size of transmission resources after switching is proportional to the size of transmission resources before switching;
the size of transmission resources after switching is a sum of the size of transmission resources before switching and a reference value.

Optionally, the proportion between the size of transmission resources after switching and the size of transmission resources before switching and/or the reference value are determined by one of the following manners:
predefined; configured by the network device.

In a second aspect, embodiments of the present disclosure provide an information processing method, comprising:
sending, by the network device, a third information to the terminal for determining the location of transmission resources based on the third information; and/or
sending, by the network device, a fourth information to the terminal for determining the size of transmission resources based on the fourth information;
wherein the third information indicates location relationships between transmission resources; the fourth information indicates size relationships between transmission resources.

Optionally, the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the method further includes:
sending, by the network device, information about the subband or BWP in which the transmission resources after switching are located to the terminal.

Optionally, the size relationships between transmission resources include:
a mapping relationship between the size of transmission resources before switching and the size of transmission resources after switching.

Optionally, the mapping relationship between the sizes of transmission resources before and after switching include one or more of the following:
the size of transmission resources after switching is proportional to the size of transmission resources before switching;
the size of transmission resources after switching is a sum of the size of transmission resources before switching and a reference value.

Optionally, the method further includes:
sending, by the network device, a proportion between the size of transmission resources after switching and the size of transmission resources before switching and/or the reference value to the terminal.

In a third aspect, embodiments of the present disclosure provide an information processing device applied in a terminal, comprising:
a memory, a transceiver and a processor;
the memory is configured for storing computer programs; the transceiver is configured for transmitting and receiving data under the control of the processor; the processor is configured for reading the computer programs stored in the memory and performing the following steps:
   determining the location of transmission resources based on a first information; and/or determining the size of transmission resources based on a second information;
   wherein the first information includes one of the following:
      location relationships between transmission resources; information of the terminal; pre-configured location of starting resource block (RB);
      the second information includes: size relationships between transmission resources.

Optionally, the location relationships between transmission resources includes one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the first information includes location relationship between transmission resources;
the processor is further configured for reading the computer programs stored in the memory and performing:
receiving the first information sent by the network device, and determining the location of the transmission resources after switching based on the first information; or,
receiving the first information sent by the network device and determining the location of the transmission resources after switching based on the first information and predefined rules.

Optionally, the information of the terminal includes an identity (ID) of the terminal; the processor is further configured for reading the computer programs stored in the memory and performing:
determining the location of the starting transmission resources after switching based on the ID of the terminal.

Optionally, the first information includes pre-configured locations of starting RBs; the processor is further configured for reading the computer programs stored in the memory and performing:
determining the starting location of the transmission resources after switching based on a third information and the pre-configured locations of starting RBs;
wherein the third information includes one or more of the following:
   terminal ID, the location of the starting RBs of an activated full-duplex PDCCH.

Optionally, the size relationships between transmission resources include:
the size of transmission resources before switching is consistent with that after switching; or,
a mapping relationship between the size of transmission resources before switching and the size of transmission resources after switching.

Optionally, the mapping relationship between the sizes of transmission resources include one or more of the following:
the size of transmission resources after switching is proportional to the size of transmission resources before switching;
the size of transmission resources after switching is a sum of the size of transmission resources before switching and a reference value.

In a fourth aspect, embodiments of the present disclosure provide an information processing device applied in a network device, comprising:
a memory, a transceiver and a processor;
the memory is provided for storing computer programs; the transceiver is provided for transmitting and receiving data under the control of the processor; the processor is provided for reading the computer programs stored in the memory and implementing the following steps:
   sending a third information to the terminal for determining the location of transmission resources based on the third information; and/or
   sending a fourth information to the terminal for determining the size of transmission resources based on the fourth information;
   wherein the third information indicates location relationships between transmission resources; the fourth information indicates size relationships between transmission resources.

Optionally, the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the processor is further configured to read the computer programs stored in the memory and perform the following steps:
sending information about the subband or BWP in which the transmission resources after switching are located to the terminal.
Optionally, the size relationships between transmission resources include:
   a mapping relationship between the size of transmission resources before switching and the size of transmission resources after switching.

Optionally, the mapping relationship between the sizes of transmission resources before and after switching include one or more of the following:
the size of transmission resources after switching is proportional to the size of transmission resources before switching;
the size of transmission resources after switching is a sum of the size of transmission resources before switching and a reference value.

Optionally, the processor is further configured to read the computer programs stored in the memory and perform the following steps:
sending a proportion between the size of transmission resources after switching and the size of transmission resources before switching and/or the reference value to the terminal.

In a fifth aspect, embodiments of the present disclosure provide an information processing device applied in a terminal, comprising:
a first determining unit for determining the location of transmission resources based on a first information; and/or determining the size of transmission resources based on a second information;
wherein the first information includes one of the following:
   location relationships between transmission resources; information of the terminal; pre-configured location of starting resource block (RB);
   the second information includes: size relationships between transmission resources.

In a sixth aspect, embodiments of the present disclosure provide an information processing device applied in a network device, comprising:
a first sending unit for sending a third information to the terminal for determining the location of transmission resources based on the third information; and/or sending a fourth information to the terminal for determining the size of transmission resources based on the fourth information;
wherein the third information indicates location relationships between transmission resources; the fourth information indicates size relationships between transmission resources.

In a seventh aspect, embodiments of the present disclosure also provide a processor-readable storage medium for storing a computer program thereon, which perform the steps of the information processing method described above when the computer program is executed by a processor.

According to the embodiments of the present disclosure, the terminal determines the location of transmission resources based on the first information or determines the size of transmission resources based on the second information, thereby configuration through DCI or RRC signaling can be avoided and signaling overhead is reduced.

### BRIEF DESCRIPTION OF THE DRAWINGS

Figure 1 is a flowchart of the information processing method according to an embodiment of the present disclosure;
Figure 2 is a further flowchart of the information processing method according to an embodiment of the present disclosure;
Figure 3 is a schematic view of the location of transmission resources according to an embodiment of the present disclosure;
Figure 4 is a further schematic view of the location of transmission resources according to an embodiment of the present disclosure;
Figure 5 is a further schematic view of the location of transmission resources according to an embodiment of the present disclosure;
Figure 6 is a structural diagram of the information processing device according to an embodiment of the present disclosure;
Figure 7 is a further structural diagram of the information processing device according to an embodiment of the present disclosure;
Figure 8 is a further structural diagram of the information processing device according to an embodiment of the present disclosure;
Figure 9 is a further structural diagram of the information processing device according to an embodiment of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character '/' generally indicates that there is an 'or' relationship between associated objects in front of it and behind it.

The term "multiple" in the embodiments of the present application refers to two or more than two, and other words for expressing quantities are similar to it.

Hereinafter, the technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide an information processing method and device for reducing signaling overhead. Said methods and devices are based on the same application concept. Since the principles of solving problems in methods and devices are similar, for implementations of the devices and the methods, reference can be made to each other, the repetition of which is not described again herein.

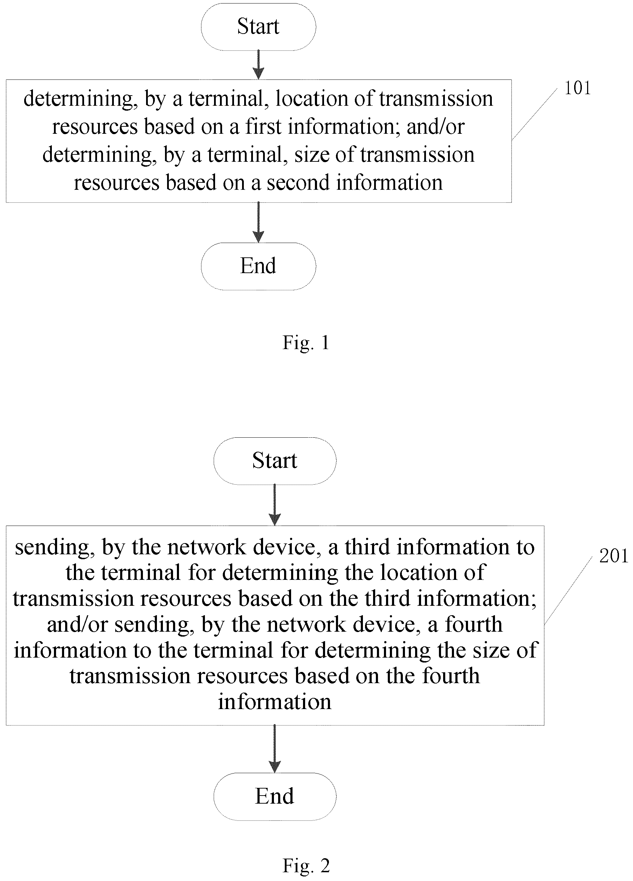

Figure 1 is a flowchart of the information processing method according to an embodiment of the present disclosure. As shown in Fig. 1, the method includes:
Step 101, determining, by a terminal, the location of transmission resources based on a first information; and/or determining, by a terminal, the size of transmission resources based on a second information;
wherein the first information includes one of the following:
   location relationships between transmission resources; information of the terminal; pre-configured location of starting resource block (RB);
   the second information includes: size relationships between transmission resources.

Firstly, the terminal determines the location of transmission resources based on a first information.

Specifically, the terminal determines the location of transmission resources after switching based on a first information; and/or, the terminal determines the size of transmission resources after switching based on a second information. In this embodiment, said switching includes BWP switching or duplex mode switching. The duplex mode switching includes switching from Time Division Duplex (TDD) to full duplex, or switching from full duplex to TDD.

The location relationships between transmission resources includes one or more of the following:
(1.1) the location of starting RBs of transmission resource before switching is relatively consistent with the location of starting RBs of transmission resource after switching;
(1.2) the location of ending RBs of transmission resource before switching is relatively consistent with the location of ending RBs of transmission resource after switching.

Said "relatively consistent" in the above (1.1) - (1.2) can be understood as that the location of the starting or ending RB (Resource Block) of the transmission resources relative to its subband or BWP (Bandwidth Part) before switching is consistent with the location of the starting or ending RB of the transmission resources relative to its subband or BWP after switching.

For example, the starting location of the transmission resources before switching is the first RB within the BWP, then after switching to full duplex or switching to another BWP, the starting location of the transmission resources is still the first RB within the subband or BWP. The information about the subband/BWP is determined by the terminal through a manner of predefining, RRC (Radio Resource Control), or DCI (Downlink Control Information).

As another example, the ending location of the transmission resources before switching is the tenth RB within the BWP, then after switching to full duplex or switching to another BWP, the ending location of the transmission resources is the tenth RB within the subband or BWP.

Based on the above relationship, the terminal can determine the location of the ending RB of the transmission resources after switching.

(1.3) The location of starting RBs of transmission resource after switching has an offset relative to the location of starting RBs of transmission resource before switching.

The starting RB of the resources after switching (RB index within the subband/BWP) is offset by K RBs relative to the starting RB of the transmission resources before switching. For example, if the starting location of the transmission resources before switching is the first RB within its BWP, then after switching to full duplex or switching to another BWP, the starting location of the transmission resources will be the (1+K)th RB within the subband or BWP. The information about the subband/BWP can be determined by the terminal through predefining, RRC (Radio Resource Control), or DCI (Downlink Control Information).

The value of K is an integer. When K is a positive integer, the starting RB location index of the resources after switching increases compared to the starting RB location index of the resources before switching. Conversely, when K is a negative integer, the starting RB location index of the resources after switching decreases compared to the starting RB location index of the resources before switching.

The value of K can be determined through predefining, RRC or DCI.

Based on the above relationship, the terminal can determine the location of the ending RB of the transmission resources after switching.

In the aforementioned cases, the information about the subband or bandwidth part (BWP) where the transmission resources are located after switching is determined through any of the following manners: predefining, or configuration by the network device.

Based on different first information as mentioned above, the terminal can determine the location of the transmission resources in different ways.

If the first information includes location relationship between transmission resources, the terminal receives the first information sent by the network device, and determines the location of the transmission resources after switching based on the first information. Or, the terminal receives the first information sent by the network device and determines the location of the transmission resources after switching based on the first information and predefined rules.

Optionally, the information of the terminal includes an identity (ID) of the terminal. The terminal may determine the location of the starting transmission resources after switching based on the ID of the terminal. For example, the terminal may perform certain computation based on the ID of the terminal, and determine the starting location of the transmission resource after switching based on the result of the computation.

Optionally, the first information includes pre-configured locations of starting RBs. The terminal determines the starting location of the transmission resources after switching based on a third information and the pre-configured locations of starting RBs;
wherein the third information includes one or more of the following:
terminal ID, the location of the starting RBs of an activated full-duplex PDCCH.

For example, the location of the starting RB of the transmission resources after switching may be predefined in conjunction with the terminal ID. For instance, if a terminal has mod(UE ID, 10)=0, the starting RB location of the terminal is 0. As a further example, the starting RB location y of the transmission resources after switching may have a mapping relationship with the starting RB location x of the PDCCH with activated duplex mode, such that y = f(x).

Secondly, the terminal determines the size of transmission resources based on a second information.

According to the embodiments of the present disclosure, the size relationships between transmission resources include any one of the following:
(2.1) The size of transmission resources before switching is consistent with that after switching.

The size relationship between the transmission resources before switching and the transmission resources after switching is determined through any of the following manners: predefined; configured by the network device.

If the size relationship is predefined, the network device does not need to indicate the size information of the resources after switching. The terminal can determine the size and starting/ending positions of the resources after switching based on the size of the resources before switching and the starting/ending positions after switching.

(2.2) There is a mapping relationship between the size of transmission resources before switching and the size of transmission resources after switching.

The mapping relationship between the sizes of transmission resources include one or more of the following:
the size of transmission resources after switching is proportional to the size of transmission resources before switching;

The size of transmission resources after switching is a sum of the size of transmission resources before switching and a reference value.
the proportion between the size of transmission resources after switching and the size of transmission resources before switching and/or the reference value are determined by one of the following manners:
predefined; configured by the network device.

For example, the proportional relationship between the size of the transmission resources after switching and before switching can be expressed in either of the following forms:
(1) N_after = k × N_before (where k is a positive integer) or N_after = N_before × 2^k (where k is an integer), where N_after represents the number of RBs after switching, and N_before represents the number of RBs before switching.
(2) N_after = N_before + M, where M is an integer.

Here, k represents the ratio, and M represents the reference value. Both k and M can be predefined, configured dynamically by RRC or DCI signaling.

Considering the overhead of re-encoding, if the size of the transmission resources after switching is larger than before, simple repetition transmission may be performed. In this case, it is preferable that the size of the transmission resources after switching is an integer multiple of the size of the transmission resources before switching.

In the above embodiments, the solution of determining the position of the transmission resources by the terminal can be used in combination with the solution for determining the size of the transmission resources, or can be used independently.

In the embodiments of the present disclosure, the terminal determines the location of the transmission resources based on the first information or determine the size of the transmission resources based on the second information, thereby eliminating the need to configure resources through DCI or RRC signaling, the signaling overhead can be reduced.

Figure 2 is a flowchart of the information processing method according to an embodiment of the present disclosure. The method as shown in Fig.2 includes the following steps:
Step 201, sending, by the network device, a third information to the terminal for determining the location of transmission resources based on the third information; and/or
sending, by the network device, a fourth information to the terminal for determining the size of transmission resources based on the fourth information;
wherein the third information indicates location relationships between transmission resources; the fourth information indicates size relationships between transmission resources.

The location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

The description to the location relationships between transmission resources in the above embodiments may be referred to for explanation.

On the basis of the above embodiments, the network device may further send information about the subband or BWP in which the transmission resources after switching are located to the terminal, such that terminal can accurately determine the location of the transmission resources after switching.

The size relationships between transmission resources include: a mapping relationship between the size of transmission resources before switching and the size of transmission resources after switching.

The mapping relationship between the sizes of transmission resources before and after switching include one or more of the following:
the size of transmission resources after switching is proportional to the size of transmission resources before switching;
the size of transmission resources after switching is a sum of the size of transmission resources before switching and a reference value.

On the basis of the above embodiments, the network device may further send a proportion between the size of transmission resources after switching and the size of transmission resources before switching and/or the reference value to the terminal.

In the embodiments of the present disclosure, the terminal determines the location of the transmission resources based on the first information or determine the size of the transmission resources based on the second information, thereby eliminating the need to configure resources through DCI or RRC signaling, the signaling overhead can be reduced.

As described above, in order to address the coverage, latency, and capacity issues of uplink transmission in TDD mode, research is focused on non-overlapping sub-band full duplex. This approach divides frequency domain resources into multiple subbands that do not overlap, with uplink and downlink frequency domain resources located in different subbands, hereinafter referred to as full duplex.

When the network switches from a static/dynamic TDD mode to the full duplex mode, the resources for retransmission configured previously may become unavailable, leading to retransmission interruptions since the current standard does not support reconfiguration of resources. To address the issue of unavailable retransmission resources after switching, solutions implemented by the network device side can be considered. For example, the network device may wait for all User Equipment (UE) to complete retransmissions before switching, or the network device may ensure through scheduling that resources allocated to UE remain available after a duplex switching. However, both of these solutions limit the flexibility of network deployment, and UEs cannot promptly utilize the abundant uplink resources provided by full duplex. Therefore, a mechanism to update retransmission resource configuration is needed.

Additionally, in order to allow UEs to promptly utilize the abundant uplink resources provided by full duplex, if the network intends to change the size/location of resources corresponding to the remaining retransmissions after switching to full duplex mode, a mechanism to update retransmission resource configuration is also required.

Similarly, when switching from a full duplex mode to a static/dynamic TDD mode, the above problems or network device demands still exist, necessitating a mechanism for resource reconfiguration during retransmissions.

Likewise, BWP switching may lead to UE retransmission interruptions due to the unavailability of pre-configured retransmission resources and mismatches due to changing channel conditions, requiring the network device to update the size/location of resources corresponding to the remaining retransmissions.

For configured grant Type 1 PUSCH transmissions, resources are configured all at once via RRC signaling, and existing protocols do not support changing resource configurations after RRC activation. When duplex mode switching/BWP switching occurs, rendering RRC-signaled resource configurations unavailable, a mechanism to determine resources is also needed.

In summary, during duplex mode switching/BWP switching, there are issues with reconfiguring resources for retransmission/configured grant Type 1 PUSCH transmissions.

According to the above description, it can be seen that based on the related arts, UE retransmission time-frequency domain transmission resources are notified all at once via DCI/RRC, without supporting changes to the time-frequency domain resources corresponding to the remaining retransmissions until completion. For configured grant Type 1 PUSCH transmissions, resources are also configured once via RRC signaling, and related protocols do not support changing resource configurations after RRC configuration.

In order to solve the above problems, according to the embodiments of the disclosure, the location and/or size of the resources after switching can be determined based on the location and/or size relationship of the resources before and after switching. The above schemes (1.1), (1.2), and (1.3) are used to determine the location of the resources after switching, while schemes (2.1) and (2.2) are used to determine the size of the resources after switching. In practice, the terminal can support one, two, or three of these schemes and determine according to RRC signaling, DCI, or predefined rules which one to use specifically.

The specific implementation of this disclosure will be described in conjunction with embodiments. The following embodiments describe determining the location or size of resources after switching based on the location or size relationship of resources before and after switching.

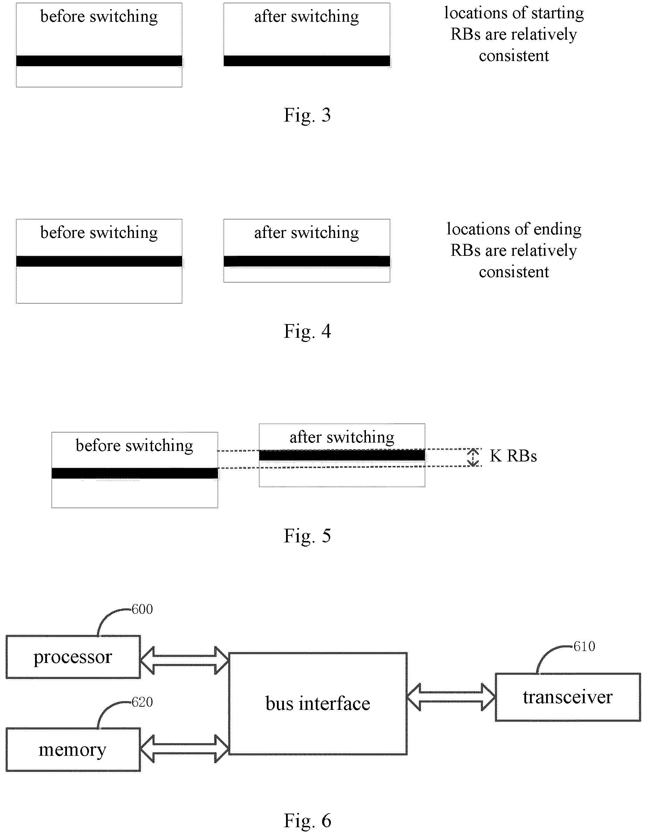

In an embodiment of the present disclosure, the location of the resources after switching can be determined based on the location relationship of resources before and after switching. Specifically, any one of the schemes (1.1), (1.2), and (1.3) can be predefined. For example, if scheme (1.1) is predefined in the protocol, the UE determines the starting location of the resources after switching based on (1.1). If the size of the subband/BWP after switching is greater than or equal to the size of the subband/BWP before switching, the UE can find resources of the same size as those before switching. If the size of the subband/BWP after switching is smaller and the protocol requires maintaining consistent resource sizes before and after switching, but the UE cannot find resources of the same size as before switching, as shown in Figure 3, then the UE may directly drop the previous transmission.

The protocol can support two of the schemes (1.1), (1.2), and (1.3), using predefined rules to determine which one to use. For example, the protocol may predefine schemes (1.1) and (1.2). When the size of the subband after switching is larger than or equal to the BWP size, the UE determines the location of the resources after switching based on (1.1). When the subband size is smaller than the BWP size, the UE determines the location of the resources after switching based on (1.2), as shown in Figure 4. Likewise, the protocol may predefine schemes (1.1) and (1.3). When the size of the subband after switching is larger than or equal to the BWP size, the UE determines the location of the resources after switching based on (1.1). When the subband size is smaller than the BWP size, the UE determines the location of the resources after switching based on rule (1.3), as shown in Figure 5.

The protocol can support two or three of the schemes (1.1), (1.2), and (1.3), and configure the mapping rules to be used semi-statically via RRC signaling. For example, when network device intends to allocate subband/BWP sizes to the UE that are greater than or equal to the subband/BWP size before switching, the network device notifies the UE via RRC signaling to use scheme (1.1) to determine the location of the resources after switching. If the network device intends to allocate subband/BWP sizes to the UE that are smaller than those before switching, the network device notifies the UE via RRC signaling to use scheme (1.2)/(1.3) to determine the location of the resources after switching.

The protocol can support two or three of the schemes (1.1), (1.2), and (1.3), and dynamically configures the rules to be used via DCI. For example, the network device notifies the UE of the subband/BWP information after switching via DCI and simultaneously configures the scheme for determining the location of the resources after switching, enabling dynamic adjustment of the resource location determination scheme according to the allocated subband/BWP size.

According to the method described in the above embodiment, resource location can be determined.

After the UE determines the starting/ending location of the resources after switching based on the aforementioned schemes, the size of the resources after switching can be decided according to the size relationship. The size relationship can be such that the size remains unchanged before and after switching as specified in the protocol, thereby determining resource locations. Alternatively, the above size relationship determining scheme can be used to determine both the location and size of the resources after switching.

Optionally, the network device can notify the UE of the duplex mode switching information via RRC or DCI, such as notifying the UE of the effective time of duplex mode switching (symbol, slot, subframe, or frame). The UE and network device may determine the duplex mode through predefined rules, such as determining the duplex mode according to a pattern of period=Xms + Yms, where Xms is the duration of Time Division Duplex (TDD) mode in a cycle, and Yms is the duration of full-duplex mode in a cycle, or Xms is the duration of duplex mode 1 in a cycle, and Yms is the duration of duplex mode 2 in a cycle. The difference between duplex mode 1 and duplex mode 2 is the division of uplink and downlink resources. Here, X and Y are positive integers. The starting time of the pattern, X, and Y can be predefined, configured via RRC, or notified through DCI.

Alternatively, the embodiment may be utilized to determine the resource configuration for repeated transmissions of the Physical Downlink Shared Channel (PDSCH), Physical Uplink Shared Channel (PUSCH), Physical Uplink Control Channel (PUCCH), as well as configured grant Type 1 PUSCH, configured grant Type 2 PUSCH, and Semi-Persistent Scheduling (SPS) in an activated state.

In an embodiment of this disclosure, the size of the resources after switching may be determined based on the size relationship of the resources before and after switching.

The protocol may specify that the frequency domain resource sizes remain consistent before and after switching, thereby avoiding the need for the network device to indicate the size information of the resources after switching. The UE may determine the size and starting/ending location of the resources after switching based on the size of the resources before switching and the starting/ending locations after switching.

Furthermore, the size relationship of resources before and after switching may also be pre-defined, configured via RRC signaling, or dynamically configured through DCI.
(1) For example, as a multiple relationship, N after = k × N_before (wherein k is a positive number) or N_after = N_before × 2^k (wherein k is an integer), N after indicating the number of RBs after switching, N_before indicating the number of RBs before switching.
(2) Alternatively, N_after = N_before + M, where M is an integer.

The values of k and M mentioned above can be predefined, configured via RRC signaling, or dynamically configured through DCI.

Considering the overhead of re-encoding, if the resources after switching are larger than those before switching, simple repetition transmission can be used. In this case, the size of the resources after switching is a multiple of the size before switching (e.g., k=2 means that the size after switching is twice the size before switching). By using repetition transmission, the transmitter is prevented re-performing channel encoding while the spare resources can be utilized by using repetition transmission mechanism.

The above size relationships may be predefined within the protocol as a fixed mapping relationship, e.g., N_after=k×N_before, with k=2, indicating that the size after switching is double the size before switching.

Alternatively, multiple size relationships may be predefined within the protocol, allowing the UE to determine which specific mapping relationship to use based on other conditions, e.g., N_aftet=k×N_before where when the size after switching equals the size before switching, k=1; when it is double, k=2; and when it is half, k=0.5.

Additionally, size relationships could be semi-statically configured via RRC signaling. For instance, when the subband/BWP size allocated to the UE after switching is equal to that before switching, the network device notifies the UE via RRC signaling to determine the resource size after switching by using N_after=k× N_before with k=1. When the subband/BWP size allocated to the UE is smaller than that before switching, the network device notifies the UE via RRC signaling to determine the resource size after switching by using N_after=k×N_before with k=0.5. When the subband/BWP size allocated to the UE is larger than that before switching, the network device notifies the UE via RRC signaling to determine the resource size after switching by using N_after=k×N_before with k=2.

The protocol may support the schemes such as N_after=k×N_before, wherein k could be multiple values (e.g., {0.5, 1, 2}) and be dynamically configured via DCI. For example, the network device notifies, through DCI, the UE of the subband/BWP information after switching and simultaneously configures the method for determining the resource size after switching, enabling dynamic adjustment of the resource size based on the allocated subband/BWP size.

According to the above embodiment, the size of the resources can be determined. This method may be used independently, meaning the starting/ending locations of resources remain unchanged, and the size is determined according to this embodiment. Alternatively, the method could be combined with the previous methods for determining resource locations after switching, thereby determining both the size and location of resources after switching.

Optionally, the network device can notify the UE of the duplex mode switching information via RRC or DCI, such as notifying the UE of the effective time of duplex mode switching (symbol, slot, subframe, or frame). The UE and network device may determine the duplex mode through predefined rules, such as determining the duplex mode according to a pattern of period=Xms + Yms, where Xms is the duration of Time Division Duplex (TDD) mode in a cycle, and Yms is the duration of full-duplex mode in a cycle, or Xms is the duration of duplex mode 1 in a cycle, and Yms is the duration of duplex mode 2 in a cycle. The difference between duplex mode 1 and duplex mode 2 is the division of uplink and downlink resources. Here, X and Y are positive integers. The starting time of the pattern, X, and Y can be predefined, configured via RRC, or notified through DCI.

Alternatively, the embodiment may be utilized to determine the resource configuration for repeated transmissions of the Physical Downlink Shared Channel (PDSCH), Physical Uplink Shared Channel (PUSCH), Physical Uplink Control Channel (PUCCH), as well as configured grant Type 1 PUSCH, configured grant Type 2 PUSCH, and SPS in an activated state.

In an embodiment of the present disclosure, the location and size of the resources after switching may be determined based on the location relationship and size relationship of the resources before and after switching.

After determining the starting/ending locations of resources after switching using the aforementioned methods, the UE further determines the size based on the above method, so as to determine resource location and size. Of course, resource size may also be configured first, followed by determination of starting/ending locations.

Optionally, the network device can notify the UE of the duplex mode switching information via RRC or DCI, such as notifying the UE of the effective time of duplex mode switching (symbol, slot, subframe, or frame). The UE and network device may determine the duplex mode through predefined rules, such as determining the duplex mode according to a pattern of period=Xms + Yms, where Xms is the duration of Time Division Duplex (TDD) mode in a cycle, and Yms is the duration of full-duplex mode in a cycle, or Xms is the duration of duplex mode 1 in a cycle, and Yms is the duration of duplex mode 2 in a cycle. The difference between duplex mode 1 and duplex mode 2 is the division of uplink and downlink resources. Here, X and Y are positive integers. The starting time of the pattern, X, and Y can be predefined, configured via RRC, or notified through DCI.

Alternatively, the embodiment may be utilized to determine the resource configuration for repeated transmissions of the Physical Downlink Shared Channel (PDSCH), Physical Uplink Shared Channel (PUSCH), Physical Uplink Control Channel (PUCCH), as well as configured grant Type 1 PUSCH, configured grant Type 2 PUSCH, and SPS in an activated state.

In an embodiment, the starting location of resources after switching could be determined based on the UE ID, for example, using starting_index = mod(UE ID, N), where N is a positive integer. For example, N=10 helps distribute different UE starting locations.

Aside from determining the starting location based on the UE ID, the UE may also uses the previous methods to determine the resource size after switching. Compared to notifying the UE of the starting location of frequency-domain resource via DCI, this embodiment reduces DCI overhead and enhances reliable transmission of frequency-domain resource information.

However, for cells with multiple duplex UEs, the starting locations of frequency-domain resources of different UEs may be identical, which requires the network equipment to divide the UEs with identical starting locations of frequency-domain resources.

Optionally, the starting location of frequency-domain resources after switching can also be determined based on a pre-configured starting RB location. During this process, additional parameters may further be considered to determine the frequency domain starting location.

For example, the starting RB location could be predefined based on the UE ID, such as mod(UE ID, 10)=0, the starting RB location of the UE is 0. Additionally, the starting RB location may be associated with a specific PDCCH (such as an activated duplex PDCCH). For instance, there could be a mapping relationship between the starting RB location y of resources after switching and the starting RB location x of the activated duplex PDCCH, expressed as y=f(x). The UE determines the starting location of frequency-domain resources using this method and can also determine the size of resources after switching according to the previous method, thereby determining both the location and size of the resources after switching. Compared to methods where the DCI notifies the UE of the starting location of frequency-domain resources, the present embodiments reduce DCI overhead and enhance the transmission reliability of frequency-domain resource information.

Optionally, the network device can configure multiple sets of resources via RRC signaling, with these multiple sets of resources mapped to duplex modes. The UE determines resources to be used for different duplex modes based on RRC signaling and the mapping relationships. These multiple sets of resources may include the starting locations and sizes of the resources, and the mapping relationships can be predefined, configured via RRC, or notified through DCI. For example, two sets of resources are configured via RRC signaling, with resource set 1 for TDD mode and resource set 2 for full-duplex/enhanced duplex modes; or two sets of resources are configured via RRC signaling, with resource set 1 for duplex mode 1 and resource set 2 for duplex mode 2.

As described above, the embodiments of the present disclosure lead to a reduced DCI overhead and improved transmission reliability of control information compared to the scheme where the resource size and location are configured through DCI.

The technical solutions in the embodiments of this application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of this application.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

As shown in Fig. 6, an information processing device applied in a network device is provided according to embodiments of the present disclosure provide, comprising:
a processor 600 for reading the computer programs stored in the memory 620 and implementing the following steps:
sending a third information to the terminal for determining the location of transmission resources based on the third information; and/or
sending a fourth information to the terminal for determining the size of transmission resources based on the fourth information;
wherein the third information indicates location relationships between transmission resources; the fourth information indicates size relationships between transmission resources.

The transceiver 610 is provided for transmitting and receiving data under the control of the processor 600. In FIG. 6, a bus architecture may include any quantity of interconnected buses and bridges. Various circuits including one or more processors represented by the processor 600 and a memory represented by the memory 620 are linked. The bus architecture may further link various other circuits together, such as a periphery component, a voltage stabilizer and a power management circuit, which are known in the art and are not further described herein. A bus interface provides an interface. The transceiver 610 may be multiple elements, i.e., including a transmitter and a receiver, providing a unit for communicating with various other devices on transmission media. The processor 600 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor 600 is in charge of managing the bus architecture and common processes. The memory 620 may store data used by the processor 600 in performing operations.

Optionally, the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the processor is further configured to read the computer programs stored in the memory and perform the following steps:
sending information about the subband or BWP in which the transmission resources after switching are located to the terminal.

Optionally, the size relationships between transmission resources include:
a mapping relationship between the size of transmission resources before switching and the size of transmission resources after switching.

Optionally, the mapping relationship between the sizes of transmission resources before and after switching include one or more of the following:
the size of transmission resources after switching is proportional to the size of transmission resources before switching;
the size of transmission resources after switching is a sum of the size of transmission resources before switching and a reference value.

Optionally, the processor is further configured to read the computer programs stored in the memory and perform the following steps:
sending a proportion between the size of transmission resources after switching and the size of transmission resources before switching and/or the reference value to the terminal.

It should be noted that the device according to the embodiments of the present disclosure may implement all method steps in the above method embodiments, and the same technical effects can be achieved. Parts of and beneficial effects of the embodiments which are the same as those of the method embodiments are not described in detail in this place.

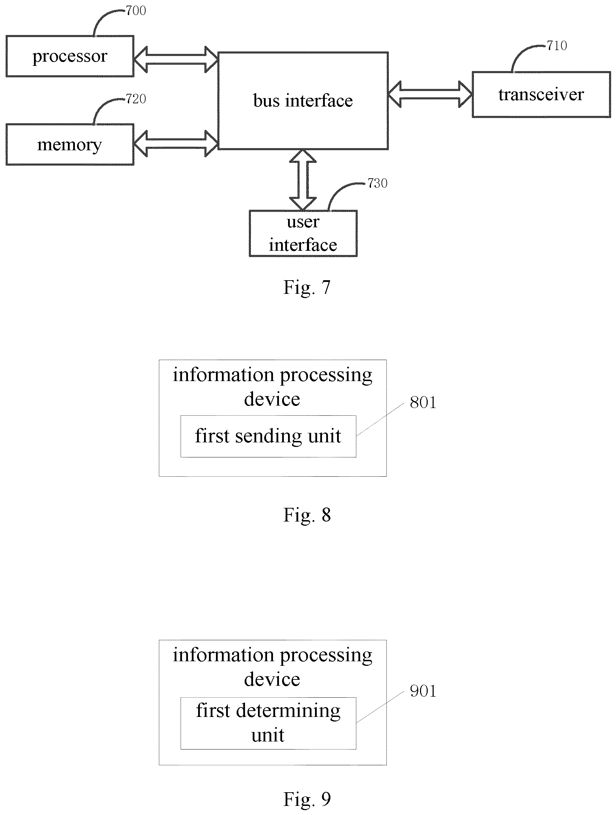

As shown in Fig. 7, embodiments of the present disclosure provide an information processing device applied in a terminal, comprising:
a first determining unit for determining the location of transmission resources based on a first information; and/or determining the size of transmission resources based on a second information;
wherein the first information includes one of the following:
   location relationships between transmission resources; information of the terminal; pre-configured location of starting resource block (RB);
   the second information includes: size relationships between transmission resources.

The transceiver 710 is provided for transmitting and receiving data under the control of the processor 700. In FIG. 7, a bus architecture may include any quantity of interconnected buses and bridges. Various circuits including one or more processors represented by the processor 700 and a memory represented by the memory 720 are linked. The bus architecture may further link various other circuits together, such as a periphery component, a voltage stabilizer and a power management circuit, which are known in the art and are not further described herein. A bus interface provides an interface. The transceiver 710 may be multiple elements, i.e., including a transmitter and a receiver, providing a unit for communicating with various other devices on transmission media. The transmission media include a wireless channel, a wired channel, an optical cable, or other transmission media. For different user equipments, the user interface 730 may be an interface capable of connecting externally and internally with the required equipment. The connected equipment includes but not limited to a keypad, a display, a speaker, a microphone, a joystick, etc.

The processor 700 is in charge of managing the bus architecture and common processes. The memory 720 may store data used by the processor 700 in performing operations. The processor 700 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Optionally, the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the first information includes location relationship between transmission resources;
the processor 700 is further configured for reading the computer programs stored in the memory and performing:
receiving the first information sent by the network device, and determining the location of the transmission resources after switching based on the first information; or,
receiving the first information sent by the network device and determining the location of the transmission resources after switching based on the first information and predefined rules.

Optionally, the information of the terminal includes an identity (ID) of the terminal; the processor 700 is further configured for reading the computer programs stored in the memory and performing:
determining the location of the starting transmission resources after switching based on the ID of the terminal.

Optionally, the first information includes pre-configured locations of starting RBs; the processor 700 is further configured for reading the computer programs stored in the memory and performing:
determining the starting location of the transmission resources after switching based on a third information and the pre-configured locations of starting RBs;
wherein the third information includes one or more of the following:
terminal ID, the location of the starting RBs of an activated full-duplex PDCCH.

Optionally, the size relationships between transmission resources include:
the size of transmission resources before switching is consistent with that after switching; or,
a mapping relationship between the size of transmission resources before switching and the size of transmission resources after switching.

Optionally, the mapping relationship between the sizes of transmission resources include one or more of the following:
the size of transmission resources after switching is proportional to the size of transmission resources before switching;
the size of transmission resources after switching is a sum of the size of transmission resources before switching and a reference value.

It should be noted that the device according to the embodiments of the present disclosure may implement all method steps in the above method embodiments, and the same technical effects can be achieved. Parts of and beneficial effects of the embodiments which are the same as those of the method embodiments are not described in detail in this place.

As shown in Fig. 8, embodiments of the present disclosure provide an information processing device applied in a network device, comprising:
a first sending unit 810 for sending a third information to the terminal for determining the location of transmission resources based on the third information; and/or sending a fourth information to the terminal for determining the size of transmission resources based on the fourth information;
wherein the third information indicates location relationships between transmission resources; the fourth information indicates size relationships between transmission resources.

Optionally, the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

Optionally, the information processing device further includes:
a second sending unit for sending information about the subband or BWP in which the transmission resources after switching are located to the terminal.

Optionally, the size relationships between transmission resources include:
a mapping relationship between the size of transmission resources before switching and the size of transmission resources after switching.

Optionally, the mapping relationship between the sizes of transmission resources before and after switching include one or more of the following:
the size of transmission resources after switching is proportional to the size of transmission resources before switching;
the size of transmission resources after switching is a sum of the size of transmission resources before switching and a reference value.

Optionally, the information processing device further includes:
a third sending unit for sending a proportion between the size of transmission resources after switching and the size of transmission resources before switching and/or the reference value to the terminal.

It should be noted that the device according to the embodiments of the present disclosure may implement all method steps in the above method embodiments, and the same technical effects can be achieved. Parts of and beneficial effects of the embodiments which are the same as those of the method embodiments are not described in detail in this place.

As shown in Fig. 9, embodiments of the present disclosure provide an information processing device applied in a terminal, comprising:
a first determining unit 901 for determining the location of transmission resources based on a first information; and/or determining the size of transmission resources based on a second information;
wherein the first information includes one of the following:
   location relationships between transmission resources; information of the terminal; pre-configured location of resource block (RB);
   the location relationships between transmission resources include one or more of the following:
      the location of starting RBs of transmission resource before switching is relatively consistent with the location of starting RBs of transmission resource after switching;
      the location of ending RBs of transmission resource before switching is relatively consistent with the location of ending RBs of transmission resource after switching;
      the location of starting RBs of transmission resource after switching has an offset relative to the location of starting RBs of transmission resource before switching.

Optionally, the first information includes location relationship between transmission resources;
the first determining unit 901 is configured for receiving the first information sent by the network device, and determining the location of the transmission resources after switching based on the first information; or,
receiving the first information sent by the network device and determining the location of the transmission resources after switching based on the first information and predefined rules.

Optionally, the information of the terminal includes an identity (ID) of the terminal; the first determining unit 901 is further configured for determining the location of the starting transmission resources after switching based on the ID of the terminal.

Optionally, the first information includes pre-configured locations of starting RBs; the first determining unit 901 is further configured for determining the starting location of the transmission resources after switching based on a third information and the pre-configured locations of starting RBs;
wherein the third information includes one or more of the following:
terminal ID, the location of the starting RBs of an activated full-duplex PDCCH.

Optionally, the sub-band or Bandwidth Part (BWP) in which the transmission resources after switching are located is determined by one of the following manners:
predefined; configured by the network device.

Optionally, the size relationships between transmission resources include:
the size of transmission resources before switching is consistent with that after switching; or,
a mapping relationship between the size of transmission resources before switching and the size of transmission resources after switching.

Optionally, the size relationships between the transmission resources before switching and the transmission resources after switching are determined through one of the following manners:
predefined; configured by the network device.

Optionally, the mapping relationship between the sizes of transmission resources include one or more of the following:
the size of transmission resources after switching is proportional to the size of transmission resources before switching;
the size of transmission resources after switching is a sum of the size of transmission resources before switching and a reference value.

Optionally, the proportion between the size of transmission resources after switching and the size of transmission resources before switching and/or the reference value are determined by one of the following manners:
predefined; configured by the network device.

The second information includes: size relationships between transmission resources.

It should be noted that the device according to the embodiments of the present disclosure may implement all method steps in the above method embodiments, and the same technical effects can be achieved. Parts of and beneficial effects of the embodiments which are the same as those of the method embodiments are not described in detail in this place.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the processor readable storage medium stores a computer program used to cause the processor to execute the method for reducing the latency applied to the terminal or the method for reducing the latency applied to the network device. The processor readable storage medium may be any available medium or data storage device that the processor may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

It should be noted that the terms "comprises," "includes," or any other variants thereof as used herein are intended to cover a non-exclusive inclusion, so that a process, method, article, or device that comprises a list of elements does not include only those elements but may also include other elements not expressly listed, or elements inherent to such a process, method, article, or device. Without further constraints, an element defined by the phrase "comprises a ..." does not exclude the presence of additional identical elements in the process, method, article, or device that comprises the element.

From the above description of the embodiments, those skilled in the art can clearly understand that the methods described in the aforementioned embodiments can be implemented by means of software in conjunction with necessary general hardware platforms. Of course, these methods can also be implemented through hardware, but in many cases, the former is a better implementation choice. With such an understanding, the essence of the technical solutions disclosed herein, or the part that contributes to the related technology, can be embodied in the form of a software product. This computer software product is stored on a storage medium (such as ROM/RAM, disk, optical disk), and includes several instructions for enabling a terminal (which can be a mobile phone, computer, server, air conditioner, or network device, etc.) to execute the methods described in various embodiments of this disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. An information processing method, comprising:
determining, by a terminal, the location of transmission resources based on a first information; and/or determining, by a terminal, the size of transmission resources based on a second information;
wherein the first information comprises one of the following:
location relationships between transmission resources; information of the terminal; pre-configured location of starting resource block (RB);
the second information comprises: size relationships between transmission resources.

2. The method according to claim 1, wherein the location relationships between transmission resources comprises one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching; or,
the location of starting RBs of transmission resource after switching has an offset relative to the location of starting RBs of transmission resource before switching.

3. The method according to claim 2, wherein the first information comprises location relationship between transmission resources;
the determining, by the terminal, the location of transmission resources based on the first information, comprises:
receiving, by the terminal, the first information sent by the network device, and determining the location of the transmission resources after switching based on the first information; or,
receiving, by the terminal, the first information sent by the network device and determining the location of the transmission resources after switching based on the first information and predefined rules.

4. The method according to claim 1, wherein the information of the terminal comprises an identity (ID) of the terminal;
the determining, by the terminal, the location of transmission resources based on the first information, comprises:
determining, by the terminal, the location of the starting transmission resources after switching based on the ID of the terminal.

5. The method according to claim 1, wherein the first information comprises pre-configured locations of starting RBs; the determining, by the terminal, the location of transmission resources based on the first information, comprises:
determining, by the terminal, the starting location of the transmission resources after switching based on a third information and the pre-configured locations of starting RBs;
wherein the third information comprises one or more of the following:
terminal ID, the location of the starting RBs of an activated full-duplex Physical Downlink Control Channel (PDCCH).

6. The method according to claim 2, wherein the sub-band or Bandwidth Part (BWP) in which the transmission resources after switching are located is determined by one of the following manners:
predefined; or, configured by the network device.

7. The method according to claim 1, wherein the size relationships between transmission resources comprise:
the size of transmission resources before switching is consistent with that after switching; or,
a mapping relationship between the size of transmission resources before switching and the size of transmission resources after switching.

8. The method according to claim 7, wherein the size relationships between the transmission resources before switching and the transmission resources after switching are determined through one of the following manners:
predefined; configured by the network device.

9. The method according to claim 1, wherein the mapping relationship between the sizes of transmission resources comprises one or more of the following:
the size of transmission resources after switching is proportional to the size of transmission resources before switching; or,
the size of transmission resources after switching is a sum of the size of transmission resources before switching and a reference value.

10. The method according to claim 9, wherein the proportion between the size of transmission resources after switching and the size of transmission resources before switching and/or the reference value are determined by one of the following manners:
predefined; configured by the network device.

11. An information processing method, comprising:
sending, by the network device, a third information to the terminal for determining the location of transmission resources based on the third information; and/or
sending, by the network device, a fourth information to the terminal for determining the size of transmission resources based on the fourth information;
wherein the third information indicates location relationships between transmission resources; the fourth information indicates size relationships between transmission resources.

12. The method according to claim 11, wherein the location relationships between transmission resources include one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching;
the location of starting RBs of transmission resource after switching has an offset relative to the location of starting RBs of transmission resource before switching.

13. The method according to claim 11, further comprising:
sending, by the network device, information about the subband or BWP in which the transmission resources after switching are located to the terminal.

14. The method according to claim 11, wherein the size relationships between transmission resources comprises:
a mapping relationship between the size of transmission resources before switching and the size of transmission resources after switching.

15. The method according to claim 14, wherein the mapping relationship between the sizes of transmission resources before and after switching include one or more of the following:
the size of transmission resources after switching is proportional to the size of transmission resources before switching; or,
the size of transmission resources after switching is a sum of the size of transmission resources before switching and a reference value.

16. The method according to claim 15, further comprising:
sending, by the network device, a proportion between the size of transmission resources after switching and the size of transmission resources before switching and/or the reference value to the terminal.

17. An information processing device applied in a terminal, comprising:
a memory, a transceiver and a processor;
the memory is configured for storing computer programs; the transceiver is configured for transmitting and receiving data under the control of the processor; the processor is configured for reading the computer programs stored in the memory and performing the following steps:
determining the location of transmission resources based on a first information; and/or determining the size of transmission resources based on a second information;
wherein the first information comprises one of the following:
location relationships between transmission resources; information of the terminal; pre-configured location of resource block (RB);
the second information comprises: size relationships among transmission resources.

18. The device according to claim 17, wherein the location relationships between transmission resources comprises one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching; or,
the location of starting RBs of transmission resource after switching has an offset relative to the location of starting RBs of transmission resource before switching.

19. The device according to claim 18, wherein the first information comprises location relationship between transmission resources;
the processor is further configured to read the computer programs stored in the memory and perform:
receiving the first information sent by the network device, and determining the location of the transmission resources after switching based on the first information; or,
receiving the first information sent by the network device and determining the location of the transmission resources after switching based on the first information and predefined rules.

20. The device according to claim 17, wherein the information of the terminal comprises an identity (ID) of the terminal; the processor is further configured to read the computer programs stored in the memory and perform:
determining the location of the starting transmission resources after switching based on the ID of the terminal.

21. The device according to claim 17, wherein the first information comprises pre-configured locations of starting RBs; the processor is further configured to read the computer programs stored in the memory and perform:
determining the starting location of the transmission resources after switching based on a third information and the pre-configured locations of starting RBs;
wherein the third information comprises one or more of the following:
terminal ID, the location of the starting RBs of an activated full-duplex PDCCH.

22. The device according to claim 17, wherein the size relationships between transmission resources comprise:
the size of transmission resources before switching is consistent with the size of transmission resources after switching; or,
a mapping relationship between the size of transmission resources before switching and the size of transmission resources after switching.

23. The device according to claim 17, wherein the mapping relationship between the sizes of transmission resources comprise one or more of the following:
the size of transmission resources after switching is proportional to the size of transmission resources before switching; or,
the size of transmission resources after switching is a sum of the size of transmission resources before switching and a reference value.

24. An information processing device applied in a network device, comprising:
a memory, a transceiver and a processor;
the memory is provided for storing computer programs; the transceiver is provided for transmitting and receiving data under the control of the processor; the processor is provided for reading the computer programs stored in the memory and implementing the following steps:
sending a third information to the terminal for determining the location of transmission resources based on the third information; and/or
sending a fourth information to the terminal for determining the size of transmission resources based on the fourth information;
wherein the third information indicates location relationships between transmission resources; the fourth information indicates size relationships between transmission resources.

25. The device according to claim 24, wherein the location relationships between transmission resources comprise one or more of the following:
the location of starting RBs of transmission resource before switching is relatively consistent with the location of starting RBs of transmission resource after switching;
the location of ending RBs of transmission resource before switching is relatively consistent with the location of ending RBs of transmission resource after switching; or,
the location of starting RBs of transmission resource after switching has an offset relative to the location of starting RBs of transmission resource before switching.

26. The device according to claim 24, wherein the processor is further configured to read the computer programs stored in the memory and perform the following steps:
sending information about the subband or BWP in which the transmission resources after switching are located to the terminal.

27. The device according to claim 24, wherein the size relationship between transmission resources comprises:
a mapping relationship between the size of transmission resources before switching and the size of transmission resources after switching.

28. The device according to claim 27, wherein the mapping relationship between the sizes of transmission resources before and after switching comprises one or more of the following:
the size of transmission resources after switching is proportional to the size of transmission resources before switching; or,
the size of transmission resources after switching is a sum of the size of transmission resources before switching and a reference value.

29. The device according to claim 28, wherein the processor is further configured to read the computer programs stored in the memory and perform:
sending a proportion between the size of transmission resources after switching and the size of transmission resources before switching and/or the reference value to the terminal.

30. An information processing device applied in a terminal, comprising:
a first determining unit for determining the location of transmission resources based on a first information; and/or determining the size of transmission resources based on a second information;
wherein the first information comprises one of the following:
location relationships between transmission resources; information of the terminal; pre-configured location of resource block (RB); or,
the second information includes: size relationships among transmission resources.

31. An information processing device applied in a network device, comprising:
a first sending unit for sending a third information to the terminal for determining the location of transmission resources based on the third information; and/or sending a fourth information to the terminal for determining the size of transmission resources based on the fourth information;
wherein the third information indicates location relationships between transmission resources; the fourth information indicates size relationships between transmission resources.

32. A processor readable storage medium, wherein the processor readable storage medium stores a computer program used to cause the processor to execute the method according to any one of claims 1 to 16.
